# EUROPEAN PATENT APPLICATION

(11) **EP 1 878 934 A1**
(43) Date of publication of application: **16.01.2008**
(21) Application number: 07013475.4
(22) Date of filing: 10.07.2007
(51) Int. Cl.: F16D 65/092

(54) **Multiple layer frictional material brake pad**

(30) Priority: 11.07.2006 US 484498
(71) Applicant: Akebono Corporation (North America), Elizabethtown KY 42701 (US)
(72) Inventor: Hilbrandt, William P., Plymouth Michigan 48170 (US)
(74) Representative: Bawden, Peter Charles

(57) **Abstract**

A brake pad has a backing plate (12) and a friction pad (14). The friction pad is provided with a plurality of layers (16,18). Each layer is formed from a desired material such that at least two layers are formed from different materials. A first layer of said plurality of layers is adapted to contact a brake rotor. A second layer is covered by the first layer. At least one of said first and second layers has a tapered thickness from one edge of the friction pad to the other edge. As the first layer wears, the second layer gradually transitions into contact with the brake rotor.

## Description

### FIELD

The present disclosure relates to brake pads and, more particularly, to a brake pad with a friction member formed from multiple layers.

### BACKGROUND AND SUMMARY

Brake pads and brake shoes include a backing member and a friction pad. The backing member enables the brake pad to be positioned within a caliper or the like. The friction pad contacts a rotor or drum to slow its rotation. Friction pads are formed from various types of friction material. Ordinarily, the friction material is homogenous and thus, the brake pad as it wears, provides the same friction material for braking. Thus, the brake pad exhibits consistent abrasion characteristics throughout the life of the friction pad.

Brake pads exist which includes a friction pad formed by two friction materials. Here, the friction materials are positioned adjacent one another. Thus, as the rotor or drum rotates and the friction material contacts the rotating rotor or drum, both of the friction materials are always in contact with the rotating members. Thus, if different abrasion characteristics are present in the friction pads, the rotating members are always subjected to the plural abrasion characteristics of the friction materials.

Accordingly, if one of the friction materials provide advantageous characteristics at the beginning of the brake pad life, but disadvantageous characteristics at the end of the brake pad life, there is no way to eliminate this friction material when the disadvantageous characteristics appears. Likewise, if one of the friction materials provide disadvantageous abrasion characteristics at the beginning of the pad life and, however, it provides advantageous characteristics at the end of the pad life, the rotor or drum are always in contact with both friction pads during use. Thus, it would be desirous to have a brake pad which could provide one material which has desired characteristics at the beginning of the pad life and transitions to a second material which provides advantageous abrasion characteristics during the wear life of the brake pad.

Accordingly, the present disclosure provides a brake pad which enables gradual transition from a first friction material to a second friction material. Also, a brake pad is provided which has a plurality of layers of friction material. The brake pad provides different abrasion characteristics during the wear life of the brake pad.

Further areas of applicability will become apparent from the description provided herein. It should be understood that the description and specific examples are intended for purposes of illustration only and are not intended to limit the scope of the present disclosure.

Examples of friction materials that may be used are the products from Akebono, + NS265 a formulation which has excellent noise performance, long life, and low rotor wear and + NS286 which is- a high output friction material with strong fade performance and it is less good with respect to noise and it tends to wear the rotor significantly more aggressively.

Using these friction materials in combination could be beneficial, considering two significantly different examples:

1. Use in a servo action (self actuating or self energizing) caliper. As the brake pads wear the mechanical advantage changes. Therefore, it is preferable that the effective mu of the brake pad changes as it wears to present to the driver a consistent brake output vs. input relationship and therefore good driveability. In a caliper that gains mechanical advantage as the pads wear it may be advantageous to start with a new pad that presents dominantly or entirely NS286 friction material, then gradually transition to more and more NS265 presented to the surface as the pad wears. In this way, overall brake output (factoring in mechanical effects and friction material mu) remains consistent over the life of the pads.

2. Use in aftermarket applications when brakes are serviced new pads are installed and typically the rotors are machined to present a fresh friction surface or the rotors are replaced. Over the service life of the pads the rotor tends to corrode, which can negatively affect the output of the brake and the smoothness of braking. It may therefore be advantageous to have a pad constructed to present entirely or dominantly NS265 at the surface in the new-pad condition. As the pad wears an increased surface area of NS286 is gradually and progressively exposed and therefore brought into contact with the rotor. The more abrasive nature of NS286 will prevent rotor corrosion in the area of the rotor contacted by the brake pads, improving braking output and smoothness.

In both cases, the key is a gradual transition in the % of each friction material presented to the rotor.

### DRAWINGS

The drawings described herein are for illustration purposes only and are not intended to limit the scope of the present disclosure in any way

FIG. 1 is a perspective view of a brake pad of the present disclosure.

FIG. 2 is a cross-sectional view along line 2-2 of FIG. 1.

FIG. 3 is a plan view of the brake pad of FIG. 1 during its wear life.

FIG. 4 is a cross-section view along line 4-4 of FIG. 3.

FIG. 5 is a perspective view of a brake pad like FIG. 1 of a second embodiment.

FIG. 6 is a cross-section view along lines 6-6 of FIG. 5.

FIG. 7 is a plan view of the brake pad of FIG. 5 during its wear life.

FIG. 8 is a cross-section view along line 8-8 of FIG. 7.

### DETAILED DESCRIPTION

The following description is merely exemplary in nature and is not intended to limit the present disclosure, application, or uses.

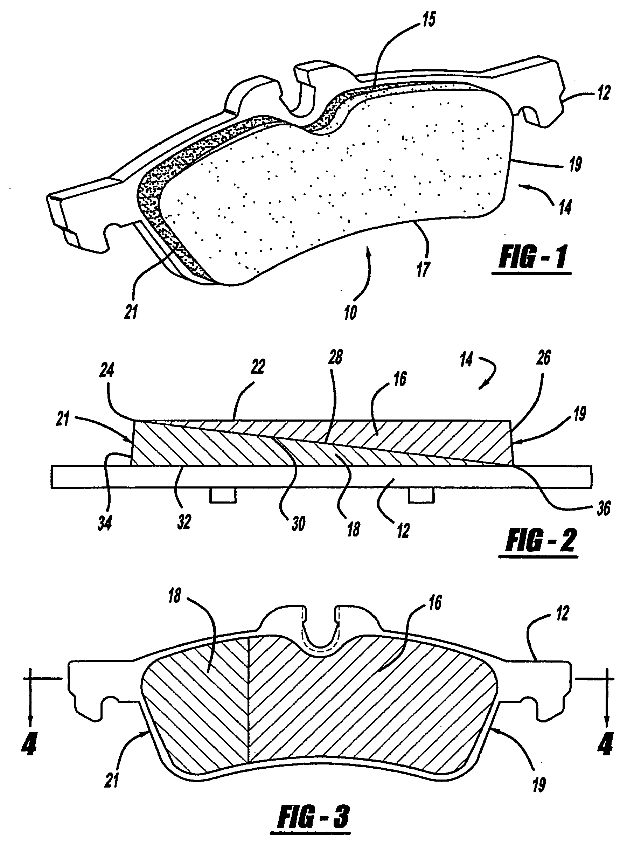

Turning to the figures, especially FIG. 1, a brake pad is illustrated and designated with the reference numeral 10. The brake pad includes a backing plate 12 and a friction pad 14. The backing plate 12 can be of any design and is generally made from a metallic material. The friction pad 14 is affixed to the backing plate 12 to form the brake pad. The friction pad 14 has an overall rectangular shape with a pair of longitudinal edges 15, 17 and a pair of lateral edges 19, 21. Also, while not shown, a brake shoe which has an arcuate backing plate with an arcuate friction pad could utilize the present teachings.

The friction pad 14 includes a plurality of layers 16 and 18. The first layer 16 defines the outer face of the friction pad 14. The first layer 16 contacts a rotor when the brake pad 10 is installed on a vehicle.

The first layer 16 has an overall rectangular shape in plan view and a wedge shape when viewed in side elevation. The layer 16 has a flat surface 22 parallel to the backing plate 12, 22 which defines the outer face of the friction pad 14. Side surfaces 24 and 26 connect the flat surfaces 22 with an inclined surface 28. Thus, the layer 16 has a tapered thickness between sides 24 and 26.

The second layer 18, like the first layer, has an overall rectangular shape in plan and a wedge shape when viewed in side elevation. The layer 18 includes an inclined surface 30, a bottom surface 32 and side surfaces 34 and 36. The bottom surface 32, in this embodiment, is parallel with and secured to the backing plate 12. The second layer 18 has a tapered thickness between sides 34 and 36. Side 36 has a smaller thickness than the side 34. This is best illustrated in FIG. 2.

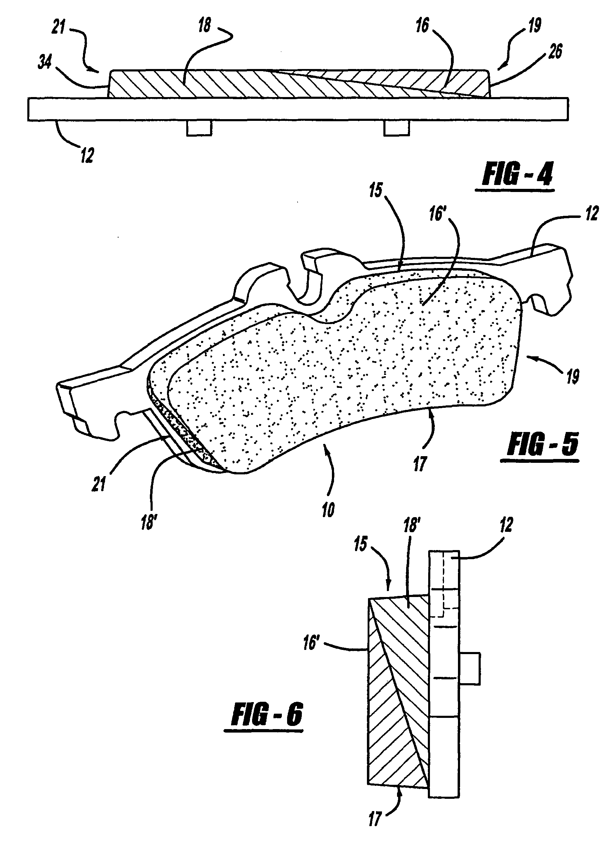

The two inclined surfaces 28 and 30 abut one another so that the smaller thickness of one layer abuts the larger thickness of the other layer. This provides a substantially uniform thickness in the friction pad 14. As the small thickness wears on the rotor, the second layer gradually becomes available to the rotor. By having a tapered thickness, the friction pad 14 gradually transitions from the first layer 16 to the second layer 18. However, due to the taper, ordinarily, during the life of the friction pad 14, the first layer 16 continues to wear exposing more of the second layer 18; however, the first layer 16, depending upon the construction, is never totally worn off. This is illustrated in FIGS. 3 and 4. The layers 16 and 18 are positioned on top of one another to form a rectangular block and the thickness tapered from one lateral edge 19 to the other lateral edge 21.

The first layer 16 is generally formed from various materials. The resulting formulation provides optimum performance for breaking in purposes at the beginning of the brake pad life cycle. Also, the friction material provides advantageous features, such as optimized NVH and wear performance to enhance and increase the overall customer satisfaction with the brake pad.

The second layer 18 is also generally formed from various materials. This formulation provides advantageous characteristics during the wear life of the brake pad. For example, the second layer may provide rust control or compensate for variations in brake caliper output or effectiveness over the lifetime of the brake pad.

Thus, as the brake pads wear, the friction material gradually transitions from one layer to the other layer of material. The gradual transition optimizes the advantageous features of each of the layers 16, 18 of material. Thus, they provide the maximum benefit over the lifetime of the brake pad.

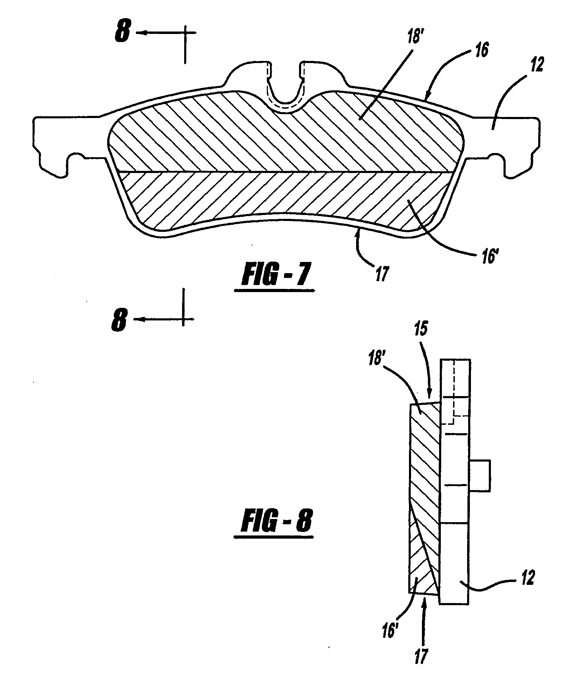

FIGS. 5-8 illustrate an additional embodiment. Here, the items which are the same have been marked with the same reference numeral.

The difference between the embodiments is that the layers 16' and 18' vary in the orientation of the taper. Here, the tapered thickness runs from the longitudinal edge 15 to the other longitudinal edge 17 of the brake pad. Thus, when viewing the brake pad, the taper is from the top to bottom in this embodiment wherein it is from side to side in the first embodiment. Additionally, the tapered thickness could be from bottom to top. The materials may be the same as those previously described.

While the above detailed description provides preferred embodiments of the present disclosure, those skilled in the art will recognize that modifications, alterations and variations can occur without deviating from the scope of the present teachings.

## Claims

1. A brake pad comprising:
a. a backing plate; and
b. a friction member secured to said backing plate, said friction member including a plurality of layers, each layer being formed from a desired material such that at least two layers are formed from differential materials, a first layer of said plurality of layers adapted to contact a brake rotor, a second layer covered by said first layer, as said first layer wears, said second layer becomes present to contact the brake rotor, and at least one of said first or second layers having a tapered thickness from edge to edge.

2. The brake pad according to Claim 1, wherein said second layer gradually becomes available and as said first layer continues to wear, more of said second layer becomes available.

3. The brake pad according to Claim 1, wherein said first layer has a tapered thickness.

4. The brake pad according to Claim 1, wherein said second layer has a tapered thickness.

5. The brake pad according to Claim 1, wherein said first and second layers have a tapered thickness.

6. The brake pad according to Claim 1, wherein said second layer has different abrasion characteristics than said first layer.

7. The brake pad according to Claim 3, wherein said taper is between longitudinal edges of the friction pad.

8. The brake pad according to Claim 4, wherein said taper is between longitudinal edges of the friction pad.

9. The brake pad according to Claim 3, wherein said taper is between lateral edges of said friction pad.

10. The brake pad according to Claim 4, wherein said taper is between lateral edges of said friction pad.

11. The brake pad according to Claim 5, wherein said taper is between longitudinal edges of the friction pad.

12. The brake pad according to Claim 5, wherein said taper is between lateral edges of said friction pad.
